# EUROPEAN PATENT APPLICATION

(11) **EP 4 389 581 A1**
(43) Date of publication of application: **26.06.2024**
(21) Application number: 22315348.7
(22) Date of filing: 22.12.2022
(51) Int. Cl.: B63B 21/50, F03D 13/25

(54) **FLOATING STRUCTURE AND MOORING SYSTEM FOR AN OFFSHORE WIND TURBINE**

(71) Applicant: TotalEnergies OneTech, 92400 Courbevoie (FR)
(72) Inventor: Barrier, Philippe, 92400 Courbevoie (FR); Benhamou, Alexis, 92400 Courbevoie (FR); Le-Guennec, Stéphane, 92400 Courbevoie (FR)
(74) Representative: Innovincia

(57) **Abstract**

The present invention relates to a floating structure (3) comprising a tensioned mooring system (5) intended to moor and stabilize the floating structure (3) to the seabed (Sb), wherein the tensioned mooring system (5) comprises
- at least three junction points (31) disposed on the floating structure (3) on an inner virtual circle (A),
- at least three peripheral anchors (53) disposed on the seabed (Sb) and at least one peripheral tendon (52) per peripheral anchors (53), each peripheral anchors (53) being linked to an individual junction point (31) with at least one peripheral tendons (52), the peripheral tendons being attached to the peripheral anchors (53) on mooring points (51) disposed on an outer virtual circle (B) coaxial with the inner virtual circle (A) and having a larger diameter than the inner virtual circle (A),
- at least one inner anchor (53'), disposed on the seabed (Sb) inside the inner virtual circle (A), each junction point (31) being attached to at least one inner anchor (53') with at least one inner tendon (52').

## Description

### TECHNICAL FIELD:

The present invention relates to a floating structure for an offshore wind turbine. More precisely, the present invention relates to the subsea configuration and mooring of a floating structure on the seabed.

### BACKGROUND:

For the installation of an offshore wind unit, comprising a turbine and a support linked to the seabed, it is well known to use support structures, like jacket structures. Such a support structure rests on the seabed and is fixed to the ground with anchor devices. The support structure extends above the sea level to receive a wind turbine mast. Generally, this support structure is made of one piece and the greater the depth is, the higher the support structure must be. However, this solution is expensive.

Another solution to install an offshore wind unit is to use a floating structure moored to the seabed with mooring lines. This solution requires the use of a floating technology. Then, the structure of a floating offshore wind unit can be subdivided as follow:
- a turbine, corresponding to a rotor nacelle assembly (RNA), comprising blades, hub and nacelle and the tower
- a floating substructure, corresponding to the floating structure supporting the turbine
- a station keeping system, corresponding to mooring lines and anchors allowing the system to remain in place

The different types of floating substructure can be distributed in different families such as for example barge, semi-submersible, spar, tension leg platform (TLP) or keel. The particularity of the tension leg platform systems (TLP) is that the station keeping system (SKS), comprising the mooring lines and the anchors, not only prevents the structure drift, but also ensures the stability of the floating structure by tensioning the mooring lines also called tendons.

The tension leg platform systems are already well known from offshore Oil & Gas activities, the tension leg platform systems used for Oil & Gas activities all comprise bundles of one or several tendons that remain in a vertical position in a static case. With the tendons in vertical configuration, the platform always remains in a vertical position (i.e. no pitch or roll motion).

However, if the tension leg platform systems reduce the motion of the floating structure compared to other mooring systems, motions may still be observed. These movements reduce the performance and the energy production of the offshore wind unit compared to a mooring with a support linked to the seabed.

One aim of the present invention is to provide an enhanced and cheap mooring system for an offshore wind turbine.

To this end, the invention relates to a floating structure comprising a tensioned mooring system intended to moor and stabilize the floating structure to the seabed, preferably for an offshore wind turbine,
wherein the tensioned mooring system comprises
- at least three junction points disposed on the floating structure on an inner virtual circle,
- at least three peripheral anchors disposed on the seabed and at least one peripheral tendon per peripheral anchors, each peripheral anchors being linked to an individual junction point with at least one peripheral tendons, the peripheral tendons being attached to the peripheral anchors on mooring points disposed on an outer virtual circle coaxial with the inner virtual circle and having a larger diameter than the inner virtual circle,
- at least one inner anchor, disposed on the seabed inside the inner virtual circle, each junction point being attached to at least one inner anchor with at least one inner tendon.

A peripheral anchor, its associated junction point and the center of the inner and outer virtual circles could be aligned on the same plane.

The at least one inner anchor could be aligned on the same plane as its associated junction point and the peripheral anchor linked to this junction point.

The tensioned mooring system could comprise a single inner anchor disposed on the center of the inner and outer virtual circles.

The mooring points could have a regular distribution on the outer virtual circle.

The junction points of the peripheral and inner tendons could have a regular distribution on the inner virtual circle.

The anchors could be permanently sealed on the seabed.

The invention also concerns an installation method of a floating structure, preferably for an offshore wind turbine, said method comprising the steps:
- disposal of at least three peripheral anchors on the seabed and attaching at least one peripheral tendons to each peripheral anchor on dedicated mooring points, said mooring points being disposed on an outer virtual circle, and disposal of at least one inner anchor on the seabed and attaching at least three inner tendons to the at least one inner anchor, said inner anchor being disposed inside an inner virtual circle coaxial with the outer virtual circle and having a smaller diameter than the outer virtual circle,
- towing of the floating structure on site above the anchors location,
- connection of the peripheral tendons of each peripheral anchor to a dedicated junction point of the floating structure and connection of the inner tendons of the at least one inner anchor to the junction points so that each junction point is attached to at least one inner anchor with an inner tendon, and tensioning the peripheral and inner tendons, said junction points being disposed on the inner virtual circle.

Concerning the installation method, a peripheral anchor, its associated junction point and the center of the inner and outer virtual circles could be disposed to be aligned on the same plane.

Concerning the installation method, the at least one inner anchor could be aligned on the same plane as its associated junction point and the peripheral anchor linked to this junction point.

Concerning the installation method, a single inner anchor could be disposed on the center of the inner and outer virtual circles.

Concerning the installation method, the mooring points on the peripheral anchors could be disposed on the outer virtual circle in a regular distribution.

Concerning the installation method, the junction points on the floating structure could be disposed on the inner virtual circle in a regular distribution.

Concerning the installation method, the inner and/or peripheral anchors could be permanently sealed on the seabed.

Further features and advantages of the invention will become apparent from the following description, given by way of non-limiting examples, with reference to the appended drawings, in which:
- Figure 1 is a side view of a schematic representation of an offshore wind unit according to a first embodiment of the present invention,
- Figure 2 is a top view of a schematic representation of the offshore wind unit of figure 1,
- Figure 3 is a top view of a schematic representation of an offshore wind unit according to a second embodiment of the present invention.

In these figures, identical elements bear the same reference numbers. The following implementations are examples. Although the description refers to one or more embodiments, this does not necessarily mean that each reference relates to the same embodiment or that the features apply only to a single embodiment. Individual features of different embodiments can also be combined or interchanged to provide other embodiments.

### DETAILED DESCRIPTION

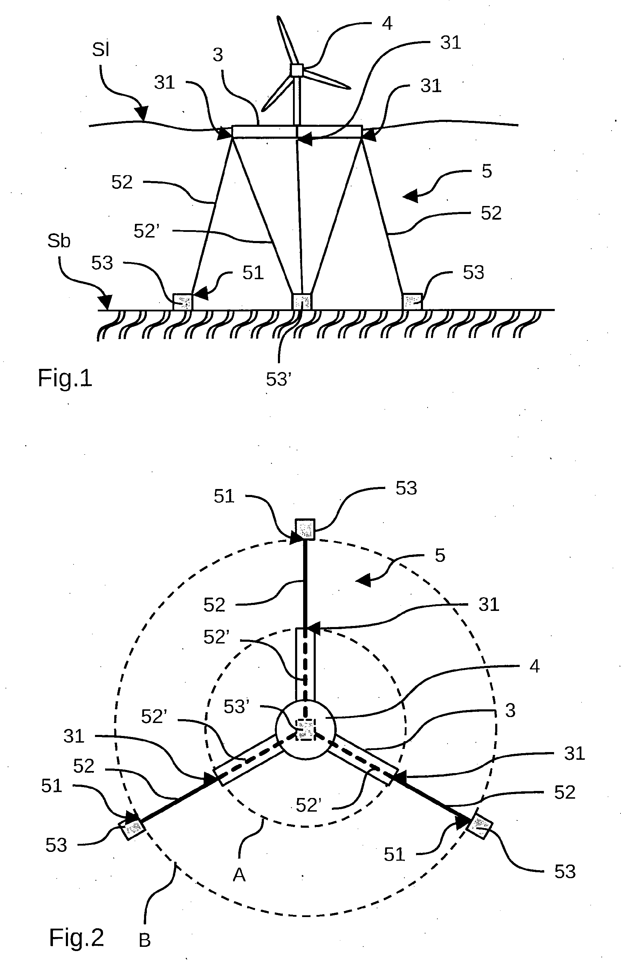

Figure 1 shows a floating structure 3. This floating structure 3 could be designed to receive a wind turbine 4 or other structures like for example an electrical sub-station for a wind farm. The floating structure 3 comprises a tensioned mooring system 5 intended to moor and stabilize the floating structure 3 to the seabed Sb. The floating structure 3 floats preferably between two waters under the sea-level Sl.

The tensioned mooring system 5 comprises at least at least three junction points 31 disposed on the floating structure 3 on an inner virtual circle A. As shown in figure 2, the center of this inner virtual circle A is preferably the relative center of the floating structure 3, for example where the mast of the turbine 4 is intended to be disposed.

The tensioned mooring system 5 also comprises at least three peripheral anchors 53 disposed on the seabed Sb and at least one peripheral tendon 52 per peripheral anchors 53. Each peripheral anchor 53 is linked to an individual junction point 31 with at least one peripheral tendon 52. The peripheral tendons 52 are attached to the peripheral anchors 53 on mooring points 51 disposed on an outer virtual circle B coaxial with the inner virtual circle A and having a larger diameter than the inner virtual circle A.

The tensioned mooring system 5 also comprises at least one inner anchor 53'. This inner anchor 53' is disposed on the seabed Sb inside the inner virtual circle A. Each junction point 31 of the floating structure 3 is attached to at least one inner anchor 53' with at least one inner tendon 52'.

This mooring configuration allows having a great stability of the floating structure 3 notably concerning the pitch or roll movements of the floating structure 3. Furthermore, by using a limited number of tendons 52, the costs remain controlled and reduced.

The diameter of the outer virtual circle B is calculated in order to have an optimum between the angle of inclination, the tension and the length of the peripheral tendons 52. This configuration allows reducing the costs by limiting the length of the peripheral tendons 52.

As shown in figure 2, a peripheral anchor 53, its associated junction point 31 and the center of the inner A and outer B virtual circles could be aligned on the same plane.

The at least one inner anchor 53' could also be aligned on the same plane as its associated junction point 31 and the peripheral anchor 53 linked to this junction point 31.

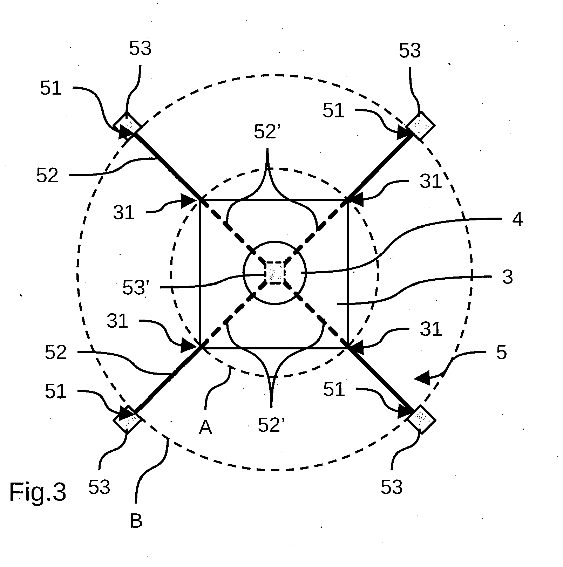

In a particular embodiment illustrated in figures 2 and 3, the tensioned mooring system 5 may comprise a single inner anchor 53' disposed on the center of the inner A and outer B virtual circles. This particular embodiment allows limiting the number of inner anchors 53' and limits the costs of installation of the floating structure 3.

The peripheral 52 and/or inner 52' tendons could be for example a metallic cable or a synthetic cable linking a metallic chain attached to a junction point 31 on the floating structure 3 and to a mooring point 51 on the anchors 53, 53'. The peripheral 52 and/or inner 52' tendons could also be a metallic chain attached to a junction point 31 and linked to a mooring point 51 on the anchors 53, 53'. The tendons 52, 52' are tensioned in order to limits the relative movements of the floating structure 3.

The inner 53' and/or peripheral 53 anchors could be for example steel piles driven into the seabed, drilled and grouted piles into the seabed or other means used in the domain of offshore wind turbine like for example suctions buckets. Preferably, the anchors 53, 53' are permanently sealed on the seabed Sb to ensure the stability and mooring of the floating structure 3.

As mentioned before, the outer virtual circle B has a larger diameter than the inner virtual circle A. The peripheral tendons 52 are inclined outwards (of the inner virtual circle A) from the vertical under the floating structure 3 as they descend towards their mooring points 51. The inner tendons 52' are also inclined inwards (of the inner virtual circle A) from the vertical under the floating structure 3 as they descend towards their inner anchor 53'. This configuration is particularly advantageous in order to increase even more the stability of the floating structure 3.

In order to have a good stability of the floating structure 3 in general, the mooring points 51 of the peripheral tendons 52 and the peripheral anchors 53 have preferably a regular distribution on the outer virtual circle B as shown in figures 2 and 3.

Also, in order to have a good stability of the floating structure 3 in general, the junction points 31 of the peripheral 52 and inner 52' tendons have preferably a regular distribution on the inner virtual circle A.

In the examples of figures 1 and 2, the floating structure 3 has a triangular shape and comprises only three junction points 31 and in consequence three peripheral anchors 53. It is also possible to imagine a floating structure 3 having a different shape with more junction points 31, more peripheral anchors 53 and also more peripheral tendons 52. The figure 3 shows for example a square shaped floating structure 3 having four junction points 31 respectively at the corners of the square and four peripheral anchors 53. Other shapes are also possible.

The present invention also concerns an installation method of a floating structure 3 designed to receive a wind turbine 4.

This installation method comprises a first step of disposal of at least three peripheral anchors 53 on the seabed Sb and attaching at least one peripheral tendon 52 to each peripheral anchor 53 on dedicated mooring points 51. As mentioned above, the mooring points 51 are disposed on an outer virtual circle B. During this first step, at least one inner anchor 53' is also disposed on the seabed Sb and at least three inner tendons 52' are attached to the at least one inner anchor 53'. The inner anchor 53' is disposed inside an inner virtual circle A coaxial with the outer virtual circle B and have a smaller diameter than the outer virtual circle B.

As mentioned above, the center of the outer virtual circle B and the inner virtual circle A is preferably the relative center of the floating structure 3, for example where the mast of the turbine 4 will be disposed. If the inner 52' and/or the peripheral 52 tendons are, for example metallic, chains or metallic cables, it is possible to let them rest directly on the seabed Sb while waiting for the next steps of the installation method. If the inner 52' and/or the peripheral 52 tendons are, for example, synthetic cables, a submerged buoy can be used to prevent the tendons 52, 52' to rest directly on the seabed Sb while waiting for the next steps of the installation method.

During this first step of disposal of the anchors 53, 53' on the seabed Sb, the inner 53' and/or peripheral 53 anchors are advantageously permanently sealed on the seabed Sb.

Still during this first step, the peripheral anchors 53 may be disposed in order that the mooring points 51 on said peripheral anchors 53 are disposed on the outer virtual circle B in a regular distribution.

A single inner anchor 53' could be disposed on the center of the inner A and outer B virtual circles during this first step.

The installation method comprises a second step of towing the floating structure 3 on site above the anchors 53, 53' location.

The junction points 31 on the floating structure 3 are advantageously disposed on the inner virtual circle A in a regular distribution.

This installation method comprises a third step of connection of the peripheral tendons 52 of each peripheral anchor 53 to the floating structure 3 to a dedicated junction points 31. During this third step, the inner tendons 52 of the at least one inner anchor 53' are also connected to the junction points 31 so that each junction point 31 is attached to at least one inner anchor 53 with an inner tendon 52'. The junction points 31 are positioned during this third step to be on the inner virtual circle A.

During this third step, the peripheral 52 and inner 52' tendons are also tensioned. Different methods for tension the tendons 52 are possible.

A first method could be to link firstly the tendons 52, 52' to the floating structure 3 on their junction points 31 and then to tense the tendons 52, 52' by known means.

A second method could be to sink the floating structure 3, for example with ballasts, to a first depth in order to link the tendons 52, 52'. After the tendons 52, 52' are linked, the floating structure 3 is raised to a shallower depth, for example by emptying the ballasts, tensioning the tendons 52, 52'.

During the installation a peripheral anchor 53, its associated junction point 31 and the center of the inner A and outer B virtual circles could be disposed to be aligned on the same plane.

During the installation, the at least one inner anchor 53' could be aligned on the same plane as its associated junction point 31 and the peripheral anchor 53 linked to this junction point 31.

## Claims

1. Floating structure (3) comprising a tensioned mooring system (5) intended to moor and stabilize the floating structure (3) to the seabed (Sb), preferably for an offshore wind turbine,
wherein the tensioned mooring system (5) comprises
- at least three junction points (31) disposed on the floating structure (3) on an inner virtual circle (A),
- at least three peripheral anchors (53) disposed on the seabed (Sb) and at least one peripheral tendon (52) per peripheral anchors (53), each peripheral anchors (53) being linked to an individual junction point (31) with at least one peripheral tendons (52), the peripheral tendons being attached to the peripheral anchors (53) on mooring points (51) disposed on an outer virtual circle (B) coaxial with the inner virtual circle (A) and having a larger diameter than the inner virtual circle (A),
- at least one inner anchor (53'), disposed on the seabed (Sb) inside the inner virtual circle (A), each junction point (31) being attached to at least one inner anchor (53') with at least one inner tendon (52').

2. Floating structure (3) according to claim 1, wherein a peripheral anchor (53), its associated junction point (31) and the center of the inner (A) and outer (B) virtual circles are aligned on the same plane.

3. Floating structure (3) according to anyone of the preceding claims, wherein the at least one inner anchor (53') is aligned on the same plane as its associated junction point (31) and the peripheral anchor (53) linked to this junction point (31).

4. Floating structure (3) according to the previous claim, wherein the tensioned mooring system (5) comprises a single inner anchor (53') disposed on the center of the inner (A) and outer (B) virtual circles.

5. Floating structure (3) according to anyone of the preceding claims, wherein the mooring points (51) have a regular distribution on the outer virtual circle (B).

6. Floating structure (3) according to anyone of the preceding claims, wherein the junction points (31) of the peripheral (52) and inner (52') tendons have a regular distribution on the inner virtual circle (A).

7. Floating structure (3) according to anyone of the preceding claims, wherein the anchors (53) are permanently sealed on the seabed (Sb).

8. Installation method of a floating structure (3), preferably for an offshore wind turbine, said method comprising the steps:
- disposal of at least three peripheral anchors (53) on the seabed (Sb) and attaching at least one peripheral tendons (52) to each peripheral anchor (53) on dedicated mooring points (51), said mooring points (51) being disposed on an outer virtual circle (B), and disposal of of at least one inner anchor (53') on the seabed (Sb) and attaching at least three inner tendons (52') to the at least one inner anchor (53'), said inner anchor being disposed inside an inner virtual circle (A) coaxial with the outer virtual circle (B) and having a smaller diameter than the outer virtual circle (B),
- towing of the floating structure (3) on site above the anchors (53, 53') location,
- connection of the peripheral tendons (52) of each peripheral anchor (53) to a dedicated junction points (31) of the floating structure (3) and connection of the inner tendons (52') of the at least one inner anchor (53') to the junction points (31) so that each junction point (31) being attached to at least one inner anchor (53) with an inner tendon (52'), and tensioning the peripheral (52) and inner (52') tendons, said junction points (31) being disposed on the inner virtual circle (A).

9. Installation method according to claim 8, wherein a peripheral anchor (53), its associated junction point (31) and the center of the inner (A) and outer (B) virtual circles are disposed to be aligned on the same plane.

10. Installation method according to anyone of claims 8 or 9, wherein the at least one inner anchor (53') is aligned on the same plane as its associated junction point (31) and the peripheral anchor (53) linked to this junction point (31).

11. Installation method according to the previous claim, wherein a single inner anchor (53') is disposed on the center of the inner (A) and outer (B) virtual circles.

12. Installation method according to anyone of claims 8 to 11, wherein the mooring points (51) on the peripheral anchors (53) are disposed on the outer virtual circle (B) in a regular distribution.

13. Installation method according to anyone of claims 8 to 12, wherein the junction points (31) on the floating structure (3) are disposed on the inner virtual circle (A) in a regular distribution.

14. Installation method according to anyone of claims 8 to 13, wherein the inner (53') and/or peripheral (53) anchors are permanently sealed on the seabed (Sb).
